# EUROPEAN PATENT APPLICATION

(11) **EP 1 408 399 A2**
(43) Date of publication of application: **14.04.2004**
(21) Application number: 03078091.0
(22) Date of filing: 29.09.2003
(51) Int. Cl.: G06F 3/033, H04N 1/21, G03B 17/00

(54) **System and method of processing a digital image for intuitive viewing**

(30) Priority: 11.10.2002 US 269258
(71) Applicant: EASTMAN KODAK COMPANY, Rochester, New York 14650 (US)
(72) Inventor: Fredlund, John R. c/o Eastman Kodak Company, Rochester, New York 14650-2201 (US); Manico, Joseph A. c/o Eastman Kodak Company, Rochester, New York 14650-2201 (US); Smart, Arthur E. c/o Eastman Kodak Company, Rochester, New York 14650-2201 (US)
(74) Representative: Haile, Helen Cynthia

(57) **Abstract**

A digital imaging system and method for viewing at least one digital image. The system includes a display. The method comprises the steps of: detecting a movement of the display; navigating within the at least one digital image in accordance with the detected movement to generate an updated view of the at least one digital image; and displaying, on the display, the updated view of the at least one digital image.

## Description

The present invention relates generally to the field of digital imaging. More particularly, the present invention relates to processing of a digital image in a manner for intuitive viewing of the digital image.

Digital images can be captured using a digital imaging system, such as a kiosk, digital video camera, digital camera, or the like. Once the digital image is captured, the image can be viewed using a digital imaging system. For example, if viewed using a kiosk, the digital image would be displayed on a monitor, screen, display, or the like (hereinafter, display). If viewed using a digital camera, the digital image would be displayed on a display of the digital camera. Thereafter, if desired, the image can be stored or transmitted to produce an output image product comprising the digital image. Examples of output image products include a hardcopy print, a mug, tee-shirt, CD, or floppy.

The image displayed on the display of the digital imaging system is dependent on the resolution of the display. In addition, the size of the displayed digital image is dependent on the size of the display. As such, a user may not be able to fully assess the content of the captured image solely from viewing the digital image in the display because of the size and/or resolution of the display. That is, the user may not be able to fully determine the content of the image by looking at the captured image in the display, particularly if the display is small in size.

Some digital imaging systems include one or more members, such as levers or buttons, to allow a user to translate or enlarge the captured image for viewing within the system's display. These features of translating/enlarging are generally referred to, respectively, as pan and zoom. By actuating the pan/zoom feature, the displayed image is translated/enlarged for viewing within the display.

However, the use of such zoom/pan members may not be intuitive, particularly to a novice user of a digital imaging system such as a digital camera.

Accordingly, a need continues to exist for a method of processing a digital image for intuitive viewing. The method should be suitable for any digital imaging system, particularly a movable/portable/hand-held digital imaging system such as a digital camera.

An object of the present invention is to provide a method of processing a digital image for intuitive viewing of the digital image.

Another object of the present invention is to provide a method of processing a digital image for intuitive viewing of the digital image and saving the information for subsequent viewing occasions.

Still, another object of the present invention is to provide such a method, which is suitable for a movable/portable/hand-held digital imaging system such as a digital camera.

These objects are given only by way of illustrative example. Thus, other desirable objectives and advantages inherently achieved by the disclosed invention may occur or become apparent to those skilled in the art. The invention is defined by the appended claims.

According to one aspect of the invention, there is provided a method of viewing at least one digital image using a digital imaging system having a display. The method comprises the steps of: detecting a movement of the display; navigating within the at least one digital image in accordance with the detected movement to generate an updated view of the at least one digital image; and displaying, on the display, the updated view of the at least one digital image.

According to another aspect of the invention, there is provided a method of viewing a plurality of digital images using a digital imaging system having a display. The method comprises the steps of: detecting a movement of the display; navigating within the plurality of digital images in accordance with the detected movement to generate an updated view of the plurality of digital images; and displaying, on the display, the updated view of the plurality of digital images.

According to another aspect of the invention, there is provided a method of viewing at least one digital image using a digital imaging system having a display. The method comprises the steps of: detecting a movement of a user relative to the display; navigating within the at least one digital image in accordance with the detected movement to generate an updated view of the at least one digital image; and displaying, on the display, the updated view of the at least one digital image.

According to yet another aspect of the invention, there is provided a method of viewing at least one digital image using a digital imaging system having a display. The method comprises the steps of: detecting a movement of the display relative to the environment; navigating within the at least one digital image in accordance with the detected movement to generate an updated view of the at least one digital image; and displaying, on the display, the updated view of the at least one digital image.

According to a further aspect of the invention, there is provided a digital imaging system, comprising: at least one detector member for detecting a movement of the display; a processor for generating an updated view of the at least one digital image by navigating within the at least one digital image in accordance with the detected movement; and a display for displaying the updated view of the at least one digital image.

According to yet a further aspect of the invention, there is provided a digital imaging system, comprising: at least one detector member for detecting a movement relative to the display; a processor for generating an updated view of the at least one digital image by navigating within the at least one digital image in accordance with the detected relative movement; and a display for displaying the updated view of the at least one digital image.

The present invention provides a method of processing a digital image for intuitive viewing. While the method is suitable for any digital imaging system, it is particularly suited for a movable/portable/hand-held digital imaging system such as a digital camera.

The foregoing and other objects, features, and advantages of the invention will be apparent from the following more particular description of the preferred embodiments of the invention, as illustrated in the accompanying drawings.

FIG. 1 generally shows a digital imaging system of an image capture device suitable for use with the method of the present invention.

FIG. 2 shows a block diagram of a digital camera suitable for use with the present invention.

FIG. 3 shows a flow diagram of a first embodiment of a method in accordance with the present invention.

FIG. 4 shows an exemplary digital image.

FIG. 5 shows the digital image of FIG. 4 displayed on a display of the digital camera of FIG. 1.

FIGS 6a through 6f show a movement of the display of the digital camera of FIG. 4 relative to a user.

FIG. 7 shows an orthogonal coordinate system which can be employed to detect the movement of the display.

FIGS. 8a and 8b show a digital camera having a detecting member disposed on a rotatable portion of the digital camera.

FIG. 9 shows an updated view of the digital image of FIG. 5 displayed in the display accordance with the detected movement of the display.

FIG. 10 shows a rotation of the digital camera relative to an orthogonal coordinate system.

FIG. 11a and 11b show the display of the digital camera disposed in a landscape aspect ratio and portrait aspect ratio, respectively.

FIG. 12 shows generally a digital imaging system in accordance with the present invention configured as a kiosk

FIG. 13 shows the kiosk of FIG. 12 wherein the detector member is configured as a mat disposed proximate the kiosk.

FIG. 14 shows the kiosk of FIG. 12 further including a portable display which can be hand-held and moved by a user.

FIG. 15 shows a diagram of features of the kiosk of FIG. 12.

The following is a detailed description of the preferred embodiments of the invention, reference being made to the drawings in which the same reference numerals identify the same elements of structure in each of the several figures.

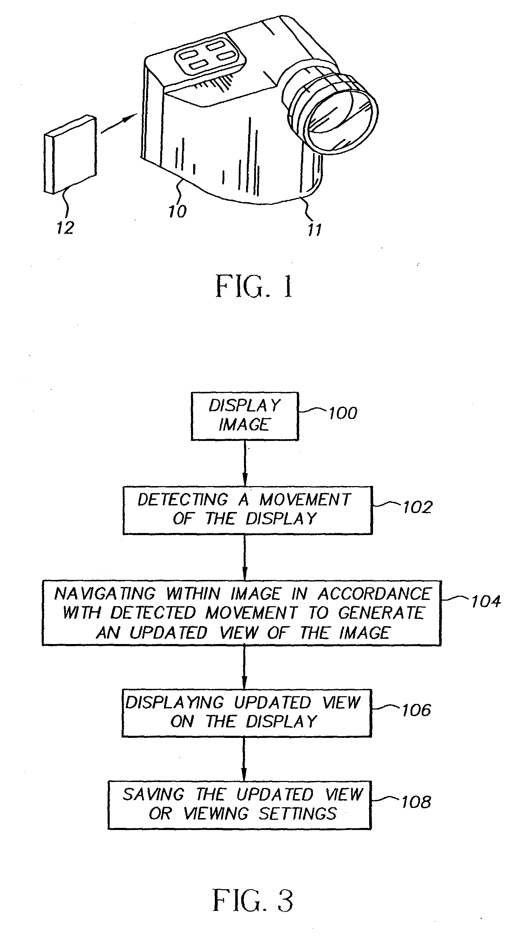

The method of the present invention is suitable for a digital imaging system, such as a kiosk (for example a Kodak Picture Maker manufactured by Eastman Kodak Company), digital image capture device, digital video camera, digital camera, or the like. It is particularly suited for a digital imaging system, which can be readily moved, such as a hand-held digital video camera or digital camera. Accordingly, for ease of discussion, the method of the present invention will be discussed with regard to a digital camera 10, generally illustrated in Figure 1, though it is recognized that the invention can be employed by other known digital imaging systems.

Digital camera 10 comprises a housing 11 and is adapted to capture images in electronic form. Digital camera 10 captures digital images, which are stored on a removable memory device such as a removable memory stick or card 12 or on an internal memory. Removable memory cards 12 are known to those skilled in the art. For example, removable memory card 12 can include memory cards adapted to the PCMCIA card interface standard and the *CompactFlash Specification Version 1.3,* published by the CompactFlash Association, Palo Alto, California, August 5, 1998. Other types of digital memory devices, such as magnetic hard drives, magnetic tape, CD, floppy disks, optical disks, or the like can alternatively be used to store the digital images.

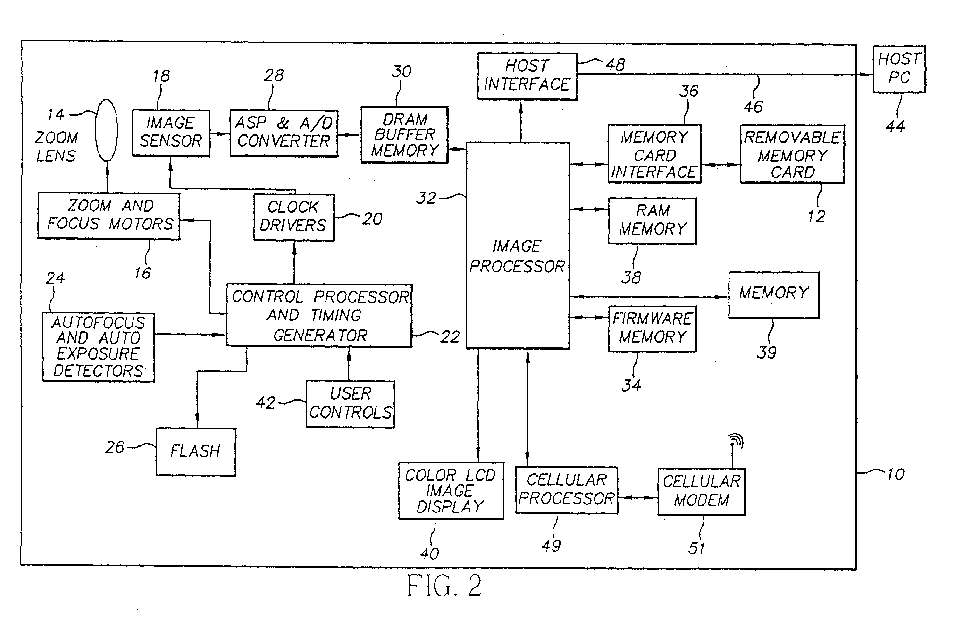

Figure 2 shows a block diagram of a typical digital camera 10 suitable for use with the method of the present invention. Digital camera 10 may include a zoom lens 14 having a zoom and focus motor 16 and an adjustable aperture and shutter (not shown). When an image is being captured using digital camera 10, zoom lens 14 focuses light from a scene being captured (not shown) onto an image sensor 18. Image sensor 18 may be, for example, a single-chip color charged couple device (CCD) image sensor, and may employ the well-known Bayer color filter pattern. Image sensor 18 is controlled by a clock driver(s) 20. Zoom and focus motors 16 and clock driver 20, are controlled by control signals supplied by a control processor and timing generator 22. Control processor and timing generator 22 receives inputs from an autofocus and autoexposure detector 24 and controls a flash 26. An analog output signal from the image sensor 18 is amplified and converted to digital data by an analog signal processing (ASP) and analog-to-digital (A/D) converter 28. Digital data received from converter 28 is stored in a DRAM buffer memory 30 and subsequently processed by an image processor 32. Image processor 32 is controlled by firmware stored in a firmware memory 34, which can be, for example, flash EPROM memory.

Image processor 32 will process the image captured in accordance with instructions stored in firmware memory 34. Image processor 32 performs color interpolation followed by color and tone correction, in order to produce rendered sRGB image data. The rendered sRGB image data can then be compressed, for example using the well-known JPEG format. Using memory card interface 36, the compressed image data is then stored as an image file on removable memory card 12. Image processor 32 preferably creates an image that is stored in RAM memory 38 and supplied to a display 40, for example a color LCD display, which displays the captured image for the user to review. The image and/or viewing settings can be stored on removable memory 12 or on an internal memory 39 to view the image on subsequent viewing occasions.

Digital camera 10 is controlled by user controls 42, such as a series of user buttons including an actuation/capture button (e.g., shutter release) (not shown) which initiates an image capturing operation. A graphical user interface displayed on the color LCD image display 40 is controlled by a user interface portion of firmware stored in firmware memory 34.

The image captured by digital camera 10 can be transferred to a personal computer by removing removable memory card 12 from image capture device 10 and inserting removable memory card 12 in a card reader (not shown) in a computer 44, such as a home personal computer. Alternatively, an interface cable 46 can be used to connect between a host interface 48 in image capture device 10 and a CPU motherboard (not shown) in computer 44. Interface cable 46 can conform to, for example, the well-known universal serial bus (USB) interface specification. Digital camera 10 can comprise a cellular processor 49 adapted to initiate a cellular phone call by means of a cellular modem 51.

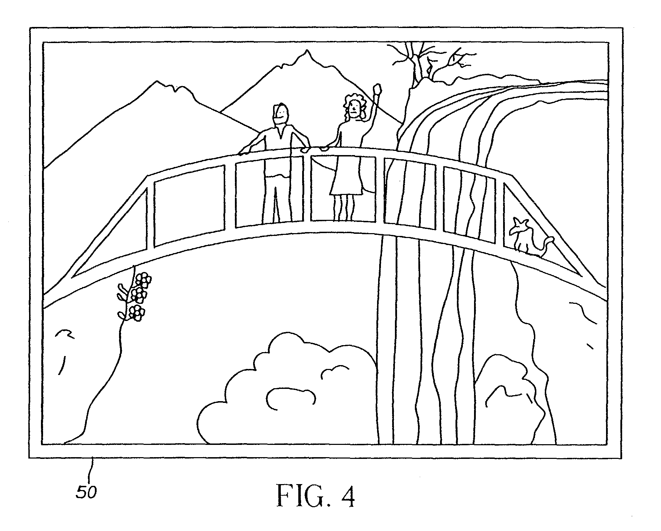

**Display moves relative to a User/environment.** Figure 3 shows a flow diagram of a first embodiment of a method in accordance with the present invention, whose steps will be more particularly described below. The method of the present invention is directed to a method of viewing at least one digital image using a digital imaging system having a display. As indicated above, the invention will be described, for ease of convenience, with reference to a digital camera having a display.

At least one digital image is accessed by digital camera 10 whereby, at step 100, the at least one image is displayed in display 40 of digital camera 10. At step 102, a movement of display 40 is detected. As will be described in further detail below, the movement can be detected relative to a user, another object proximate the display, or the environment. Then, the at least one digital image is navigated in accordance with the detected movement to generate an updated view of the at least one digital image (step 104). The updated view of the at least one digital image is then displayed on display 40 (step 106). The updated view can optionally be stored, transferred, or printed (step 108). Alternatively, the viewing settings to produce the updated view can be stored. More particularly, the coordinates employed to produce the updated view from the digital image can be stored, transferred, or printed so that the updated view can be later produced.

As will become evident, the updated view may comprise a portion of the digital image.

The steps of the method of Figure 3 will now be described in further detail with reference to the digital image 50 shown in Figure 4. Image 50 is generally of a man and woman standing on a bridge overlooking a waterfall.

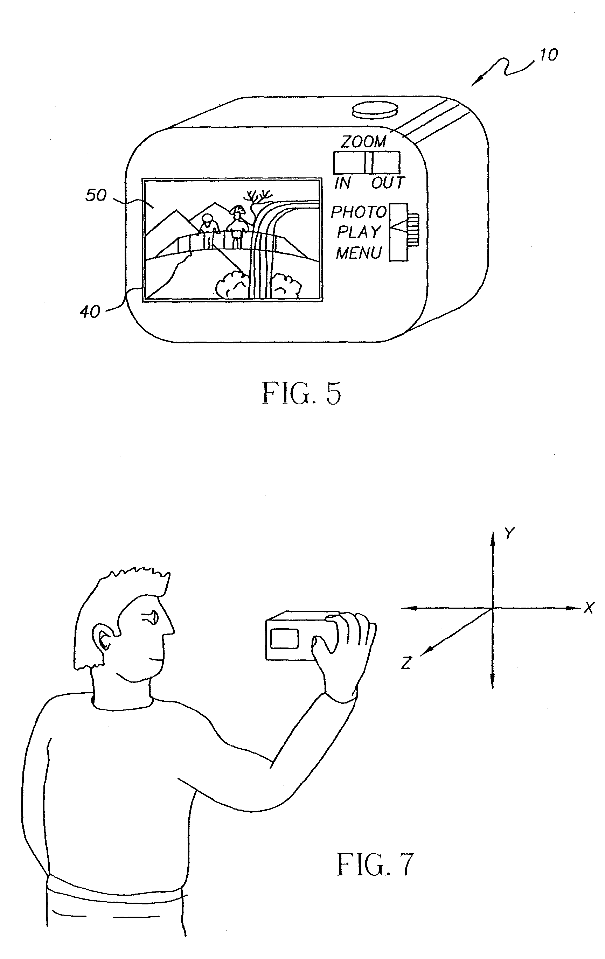

Figure 5 shows a rear view of digital camera 10 wherein image 50 is shown in display 40. If display 40 is not of a large size, such as shown in Figure 5, a user may not be able to fully assess whether an aesthetically pleasing image has been captured. For example, do the man and the woman have their eyes open? Do they look happy? Are they looking at the camera? If the user is able to assess that the captured image is not aesthetically pleasing, the user can capture another image. Displays of digital cameras are typically not large in size, for example, 280 pixels by 220 pixels. Yet, a full resolution digital image can comprise, for a 3.1 megapixel image, 2160 pixels by 1440 pixels. Accordingly, this assessment by the user is important, particularly if the user desires an enlarged hardcopy print (e.g., 8x10) of the image and/or the user wishes to later zoom/crop portions of the image. If the user's assessment is not correct, the user may fail to capture aesthetically pleasing image which captures the moment.

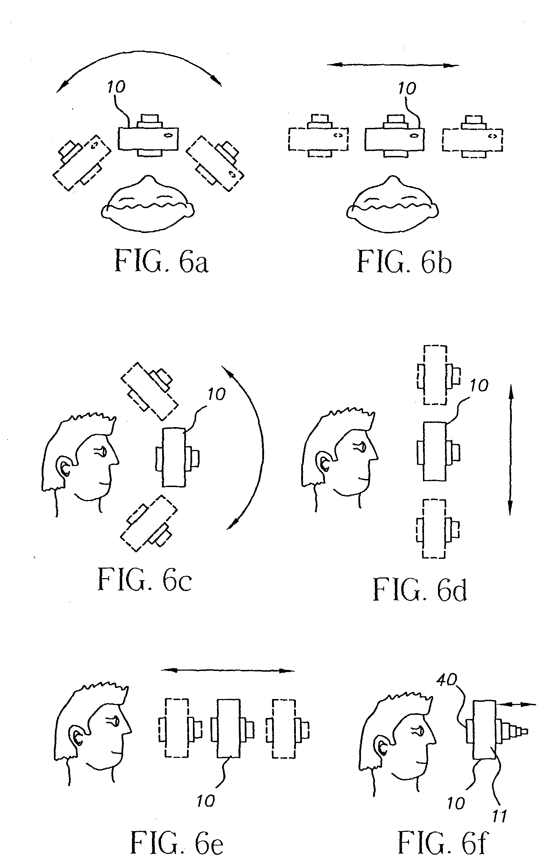

Accordingly, to view image 50 for assessment, image 50 is displayed in display 40. Display 40 is then moved whereby the movement of display 40 is detected (step 102). Digital camera 10 is a device intended to be hand held, so is readily portable and movable. As such, display 40 of digital camera 10, can be moved by a user in a plurality of methods and in a plurality of directions. Figures 6a through 6f illustrate a plurality of methods/directions by which display 40 can be moved. Other methods/directions will be known to those skilled in the art. As illustrated in Figures 6a through 6e, the digital camera is moved relative to the user. Figure 6a shows digital camera 10 being moved in an arced or curved motion relative to a user in a side-to-side direction transverse to the user. Figure 6b shows digital camera 10 being translated relative to a user in a side-to-side direction transverse to the user. Figures 6c and 6d show arced and linear motion, respectively, in the plane of the user. Figure 6e shows translation of digital camera 10 toward and/or away from the user. Display 40 can be moved using one or more (i.e., a combination) of the movements shown in Figures 6a through 6e.

Display 40 can also be moved relative to another object or the environment. For example, Figure 6f shows display 40 being translated relative to housing 11 of digital camera 10.

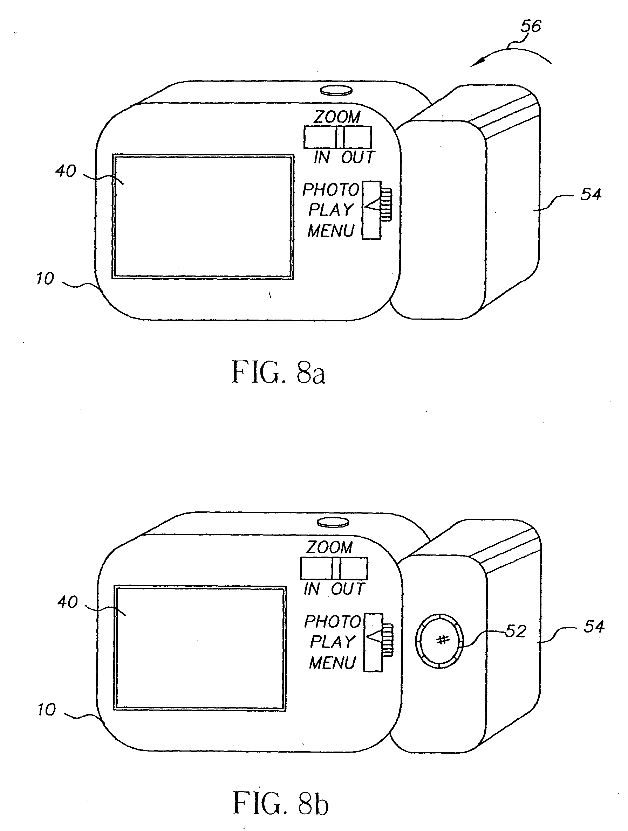

The detection of the movement can be accomplished using orthogonal coordinates or using polar coordinates. Figure 7 shows a user moving digital camera 10 wherein the movement is detected using an orthogonal coordinate system.

The movement of display 40 can be detected using a detector member known to those skilled in the art. For Figures 6a through 6e, the movement between digital camera 10 and the user is detected, with the user holding and moving the digital camera. Accordingly, the relative movement comprises a predetermined distance no greater than the length of the user's arm. Digital camera 10 can comprise a detecting member disposed internal or external to the camera or disposed on an exterior surface of the camera.

For example, the detecting member can be an image sensor adapted for image capture, and the relative movement is detected by using the image sensor. Alternatively, the detecting member can be a range finder disposed on a surface of digital camera 10, and the range finder is used to determine the relative movement. Another detecting member can be a global positioning system adapted to determine the relative movement. Still further, the detecting member can be a motion sensor used to determine a relative movement.

Figures 8a and 8b illustrate an exemplary detecting member 52 disposed on a portion 54 of digital camera 10. Portion 54 can be rotated as shown by arrow 56 to position detecting member 52 directed away from (as shown in Figure 8a) or proximate to (as shown in Figure 8b) display 40. Depending on the position of detecting member 52, detecting member 52 can be employed to detect a relative movement between display 40 and the user or a relative movement between display 40 and the environment or other object/subject. For example, when positioned proximate display 40 as shown in Figure 8b, detecting member 52 can detect the relative position of display 40 relative to the user. That is, detecting member 52 is facing the user, and is able to detect the movement of display 40 relative to the user. When positioned facing away from display 40, as shown in Figure 8a, detecting member 52 can detect the relative position of display 40 relative to an object in the environment, such as a tree or another individual. As indicated above, detecting member 52 can include an image sensor, range finder, global positioning device, and a motion sensor.

When the movement is detected, processor 32 is employed to navigate/move within the displayed image in accordance with the detected movement to generate an updated view of the digital image. That is, however display 40 moves, so will image 50 move within display 40, whereby an updated view of image 50 is displayed in display 40. For example, referring to Figures 4-7, if digital camera 10 is moved in an x-direction relative to the user, processor 32 will navigate within image 50 in an x-direction, such that display 40 will display an updated view comprising the rightmost regions of image 50 (which for image 50, includes the waterfall). Similarly, if digital camera 10 is moved in a y-direction relative to the user, processor 32 will navigate within the image in a y-direction, such that display 40 will display an updated view comprising the upper regions of image 50 (which for image 50, includes the sky and mountain tops).

Likewise, if digital camera 10 is moved toward the user (i.e., navigating in a z-direction), processor 32 will operate to zoom-in on (i.e., enlarge) that portion of image 50. For example, referring to Figure 5, to assess the faces of the man and woman of image 50, a user moves digital camera 10 in the x- and y-direction relative to the user whereby the man and woman are displayed in display 40. The user then moves digital camera 10 in the z-direction (i.e., toward the user) to zoom-in, whereby an updated view 50' of image 50, shown in Figure 8, is displayed in display 40. That is, updated view 50' is an enlargement of a portion of image 50; updated view 50' comprises a portion of image 50. This enlarged portion can be assessed by the user for its content.

Accordingly, the method of the present invention allows for intuitive viewing of the image since the user moves digital camera 10 in the direction which corresponds with the portion of the image which is desired to be displayed in display 40. As such, with the user moving digital camera 10 in space, display 40 shows different portions of the displayed image as if digital camera 10 is a window onto a larger image just beyond display 40.

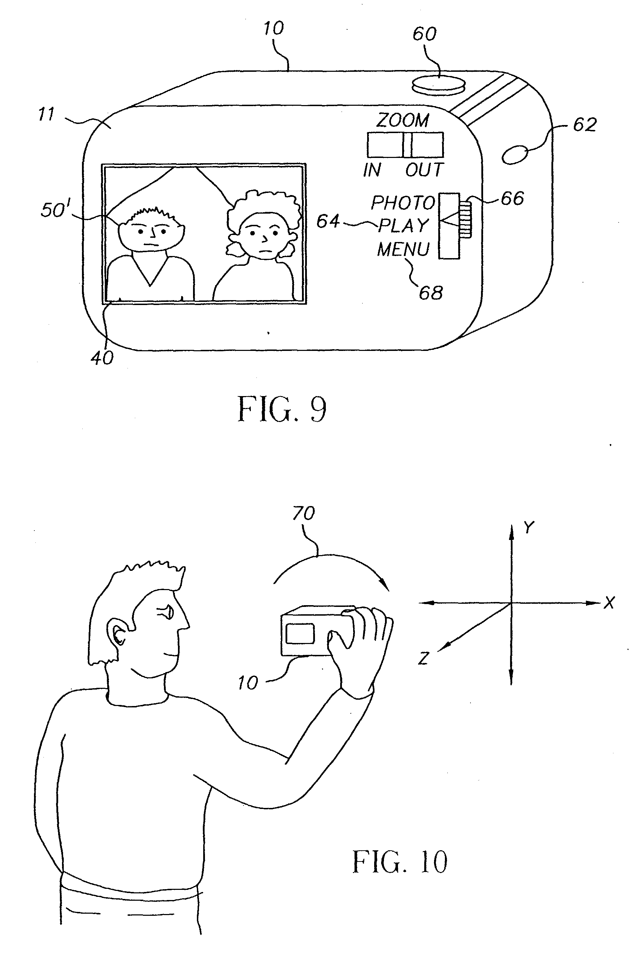

Activation. To activate the method of the present invention using digital camera 10, member(s) on digital camera 10 can be employed. Figure 9 shows digital camera 10 having an image capture activation member 60 which is fully engaged/pressed to capture an image. This image capture activation member 60 can also be employed to initiate the method of the present invention. For example, image capture activation member 60 can be partially depressed/engaged (i.e., not fully) and held in this position to activate a mode practicing the method of the present invention. In this mode, the user would be moving digital camera 10 while partially pressing image capture activation member 60, whereby the movement of display 40 would be detected and an updated view of the image displayed in display 40.

Alternatively, a feature activation member 62, separate from image capture activation member 60, can be employed. Activation member 62 would be fully depressed/engaged to initiate the method of the present invention. That is, the step of detecting a relative movement is accomplished by fully depressing feature activation member 62 to capture the relative movement. When activation member 62 is released, the updated view displayed in display 40 (in accordance with the method of the present invention) could be maintained on display 40. Such an activation member 62 can be disposed at any location on housing 11 of digital camera 10. For illustrative purposes only, feature activation member 62 is shown as being disposed along one edge of digital camera 10.

Still further, the method of the present invention can be practiced by partially depressing activation member 62 to initiate the step of detecting, and fully depressing activation member 62 while capturing the relative movement.

Yet further, the method of the present invention can be practiced by partially depressing activation member 62 to initiate the step of detecting, and fully depressing activation member 62 to stop the step of detecting.

Yet still further, a feature member 64 can be employed to initiate the method of the present invention. That is, a movable/translatable selection indicator 66 can be employed to indicate selection of select feature member 64 whereby the method of the present invention is initiated.

Alternatively, selection indicator 66 can be employed to select menu member 68 whereby a menu (not shown) is displayed in display 40 to initiate the present invention. Other means for initiating the present invention may be known to those skilled in the art.

It is noted that, for digital camera 10, selection indicator 66 can be employed to initiate the capturing of an image (i.e., an image capture mode), shown in Figure 9 by the word "photo".

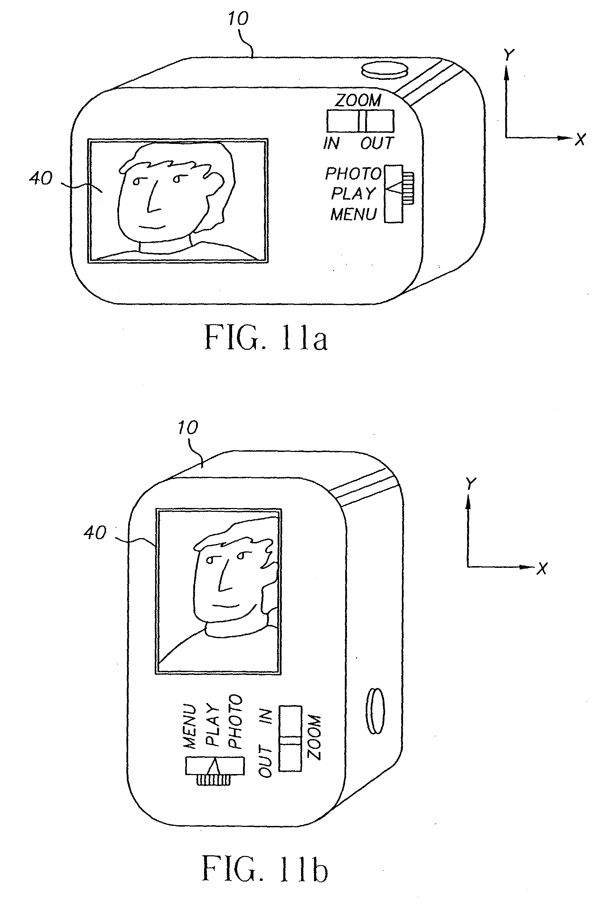

**Rotation.** Display 40 can also be rotated, as shown in Figure 10 by arrow 70. Such rotation may be desired when, for example, the displayed image is not displayed in a desired aspect ratio. Referring to Figure 11a, display 40 of digital camera 10 typically is configured as a landscape aspect ratio (i.e., the x-dimension is greater than the y-dimension). However, it may be desired to view the displayed image in a portrait aspect ratio (i.e., the y-dimension is greater than the x-dimension) as shown in Figure 11b. Accordingly, referring to Figures 3, 10 and 11a-11b, in accordance with the method of the present invention, the rotational movement of display 40 is detected, whereby an updated view displayed on display 40 is generated by navigating within the image in accordance with the detected movement. With reference to Figures 10, 11a, and 11b, Figure 11b is the updated view when digital camera 10 shown in Figure 11a is rotated in accordance with arrow 70 shown in Figure 10. Therefore, the displayed image can be rotated relative to display 40 in accordance with the detected movement of the digital imaging system.

**Plurality of images.** A plurality of images can be displayed simultaneously on display 40 whereby the method of the present invention is practiced on the plurality of images simultaneously. For example, the plurality of images can be a plurality of thumbnail images, such as might be displayed on an index sheet/print. A thumbnail image is a low-resolution image, which can be created as described in commonly assigned U.S. Patent No. 5,164,831 (Kuchta). In accordance with a second embodiment of the present invention, a plurality of digital images are accessed and displayed on a display of a digital imaging system, such as a digital camera. A movement of the display is detected whereby an updated view of the plurality of digital images is generated by navigating within the plurality of digital images in accordance with the detected movement. Once the updated view is generated, the updated view of the plurality of digital images is displayed on the display.

**User/environment moves relative to a Display.** The digital imaging system 10 may not be readily moveable. In accordance with a third embodiment of the present invention, a relative movement between a stationary digital imaging system and a moveable user can be detected. That is, an image is accessed and displayed on display 40. Then, a movement of a user relative to display 40 is detected. An updated view of the digital image is generated by navigating within the digital image in accordance with the detected movement. The updated view of the digital image is then displayed on display 40.

In a further embodiment, a relative movement between a stationary digital imaging system and a moveable object within the environment can be detected. An image is accessed and displayed on display 40. Then, a movement of the display relative to the environment is detected. An updated view of the digital image is generated by navigating within the digital image in accordance with the detected movement. The updated view of the digital image is then displayed on display 40. In this manner, an effect similar to looking through a window is achieved.

**Rate/amount of change.** The rate of change and the amount of change are factors which can be controlled. That is, it may be desirable to control the rate at which the update view (i.e., the displayed image) on display 40 is updated relative to the motion of display 40 or detected relative to the detected motion. For example, if the display changes completely in response to the detected motion, the user may become disoriented and lose perspective on what portion of the image is being displayed. Therefore, the change of the displayed image may be limited to some percentage of the displayed image so that the movement across the stored image appears to be a smooth transition regardless of the speed of motion detected. The direction of the motion is more important than the amount, so the amount of difference between subsequent displayed images may not directly correspond to the magnitude of the detected motion. Accelerometers might be employed.

**System.** A digital imaging system in accordance with the present invention comprises at least one detector member for detecting a movement of the display; a processor for generating an updated view of the at least one digital image by navigating within the at least one digital image in accordance with the detected movement; and a display for displaying the updated view of the at least one digital image.

With the digital imaging system is configured as digital camera 10, the elements can be as shown in Figures 1 through 11b. More particularly, detector member 52 is shown in Figure 8b; processor 32 is shown in Figure 2, and display 40 is shown in a plurality of figures, including Figure 8b.

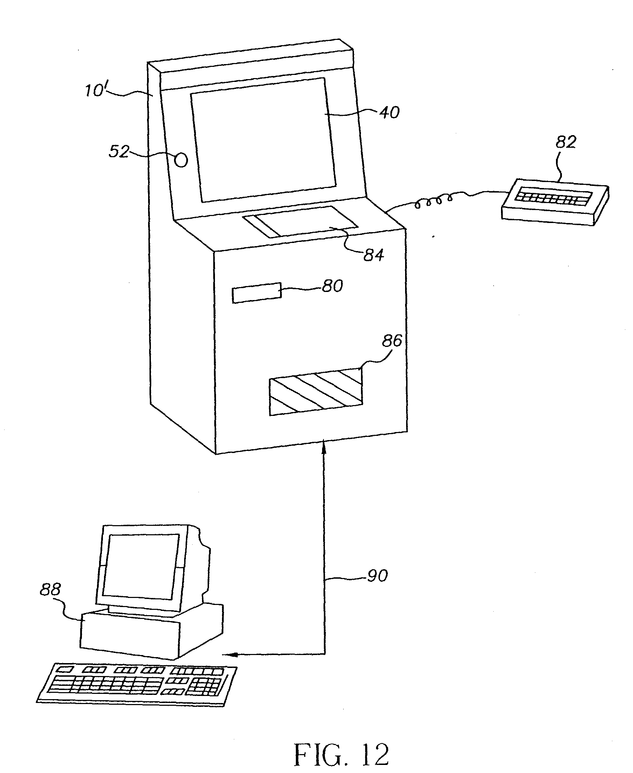

As indicated above, the digital imaging system can be configured as a kiosk. Referring now to Figure 12, Figure 12 generally illustrates a kiosk, for example a Picture Maker™ kiosk produced by Eastman Kodak Company. Kiosk 10' includes display 40 for displaying a digital image and an input port 80 adapted to receive a digital storage device such as a memory card, memory stick, media card, compact flash card, floppy disk, compact disc, PictureCD, or the like as known to those skilled in the art. Display 40 can be a touchscreen display, whereby a user can provide information and data to kiosk 10', or a keyboard 82 may be used to provide information and data. Kiosk 10' can optionally include a scanner 84 for receiving a user-supplied visual image and converting the visual image into digital form stored in a digital file. Kiosk 10' further shows an optional delivery section 86 controlling the delivery of a medium. Delivery section 86 is illustrated in Figure 12 as an opening in kiosk 10'. A digital file comprising a digital image can be transmitted to/from kiosk 10' from/to another display device, a server, digital minilab, wholesale lab, remote computer or other digital device 88 over a communication network 90.

Kiosk 10' is provided with a detection means, such as detector member 52, for determining the motion of the user. Detector member 52 can include a camera, range finder device, motion sensor or the like. In Figure 12, detector member 52 is configured as a range finder disposed on a front surface of kiosk 10'. A plurality of detector members can be employed, positioned at different locations on kiosk 10'. Kiosk 10' can employ the location information of the user to modify the image on display 40. For example, when the kiosk detects that the user has moved to one side, the image displayed on display 40 is modified so that the view appears as if the user is looking through a window or opening and now sees a different portion of the view out the window or opening. Similarly, when the user moves closer to the display, the image displayed can change to provide a wider view than before.

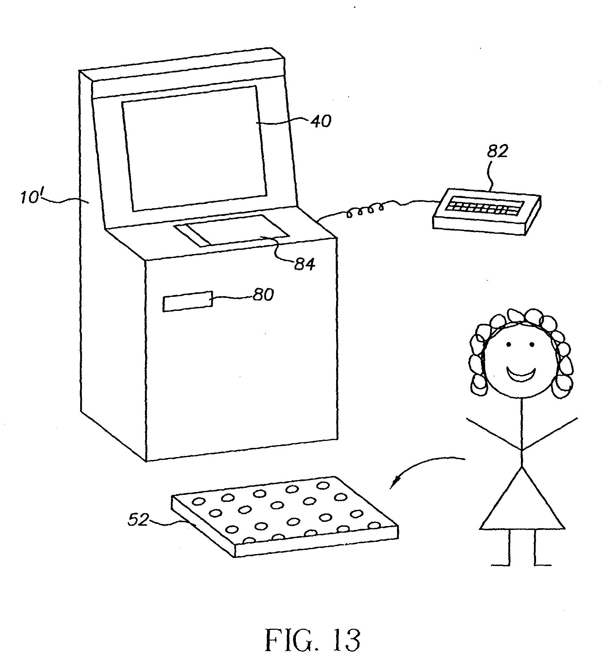

Alternatively, as shown in Figure 13, detector member 52 is configured as a mat disposed proximate kiosk 10' having a plurality of detectors adapted to determine a position of the user's foot or feet.

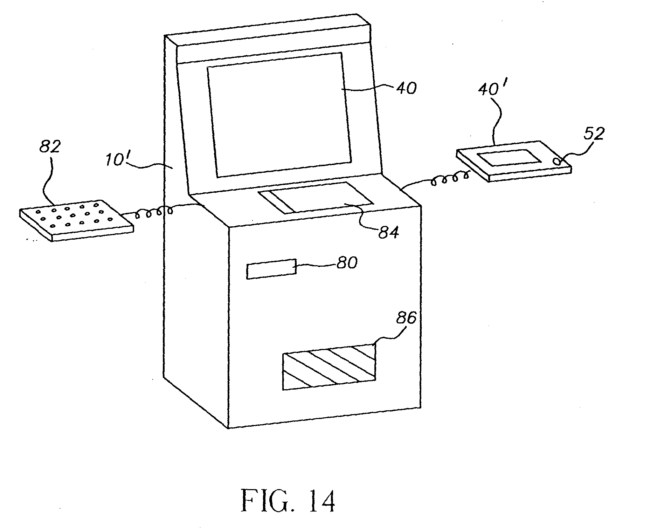

Another configuration is shown in Figure 14, wherein kiosk 10' further includes a portable display 40', which can be hand-held and moved by a user. Portable display 40' includes detector member 52 such that a relative movement between portable display 40' and either the user or kiosk 10' can be detected. As such, kiosk 10' is stationary, and display 40' is movable relative to kiosk 10'. The updated view can be displayed on either portable display 40' or display 40, or both.

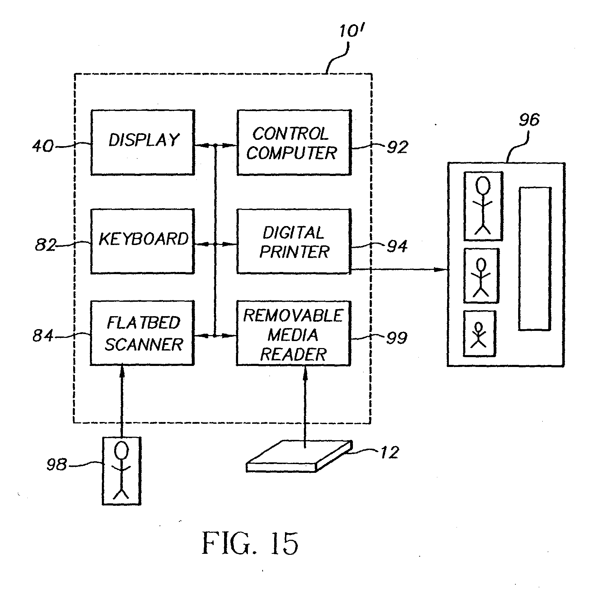

Figure 15 generally shows a diagram of included functions of kiosk 10'. As illustrated, kiosk 10' can include keyboard 82 and scanner 84. A computer 92 typically manages the flow of information and functionality of the components of kiosk 10'. Internal to kiosk 10' can be a printer 94, an example of which is the Kodak Digital Science Model 8650 manufactured by Eastman Kodak Company. Printer 94 responds to commands of computer 92 for forming an image on a medium such as thermal or ink-jet paper. An example of an output image is illustrated in Figure 13 at 96 formed from an input image 98. One method of receiving a digital image is illustrated by a removable media reader 99 disposed internal to input port 80 for receiving removable media 12, for example, a memory card, floppy disk, compact disc, PictureCD, or other form of removable media used in transferring digital files.

A computer program product may include one or more storage medium, for example; magnetic storage media such as magnetic disk (such as a floppy disk) or magnetic tape; optical storage media such as optical disk, optical tape, or machine readable bar code; solid-state electronic storage devices such as random access memory (RAM), or read-only memory (ROM); or any other physical device or media employed to store a computer program having instructions for controlling one or more computers to practice the method according to the present invention.

## Claims

1. A method of viewing at least one digital image using a digital imaging system having a display, comprising the steps of:
detecting a movement of the display;
navigating within the at least one digital image in accordance with the detected movement to generate an updated view of the at least one digital image; and
displaying, on the display, the updated view of the at least one digital image.

2. The method of Claim 1, wherein the step of detecting a movement is accomplished by detecting a movement between the digital imaging system and a user, wherein the user is holding and moving the digital imaging system.

3. The method of Claim 1, wherein the step of detecting a movement is accomplished by detecting a relative movement between the digital imaging system and a user, and the relative movement comprises a predetermined distance no greater than the length of the user's arm.

4. The method of Claim 1, wherein the step of detecting a movement is accomplished by detecting a relative movement between the digital imaging system and an environment.

5. The method of Claim 1, wherein the step of detecting a movement is accomplished by detecting a movement between a first and second member of the digital imaging system

6. The method of Claim 1, wherein the digital imaging system comprises a detecting member, the detecting member being an image sensor adapted for image capture, and the step of detecting a movement is accomplished by using the detecting member to determine a relative movement between the display and a user.

7. The method of Claim 1, wherein the digital imaging system comprises a detecting member, the detecting member being a range finder, and the step of detecting a movement is accomplished by using the detecting member to determine a relative movement between the display and a user.

8. A method of viewing at least one digital image using a digital imaging system having a display, comprising the steps of:
detecting a movement of a user relative to the display;
navigating within the at least one digital image in accordance with the detected movement to generate an updated view of the at least one digital image; and
displaying, on the display, the updated view of the at least one digital image.

9. A method of viewing at least one digital image using a digital imaging system having a display, comprising the steps of:
detecting a movement of the display relative to the environment;
navigating within the at least one digital image in accordance with the detected movement to generate an updated view of the at least one digital image; and
displaying, on the display, the updated view of the at least one digital image.

10. A digital imaging system, comprising:
at least one detector member for detecting a movement of the display;
a processor for generating an updated view of the at least one digital image by navigating within the at least one digital image in accordance with the detected movement; and
a display for displaying the updated view of the at least one digital image.
